Europäisches Patentamt

European Patent Office

Office européen des brevets

(19)

(11) **EP 0 940 560 B1**

(12) **FASCICULE DE BREVET EUROPEEN**

(45) Date de publication et mention
de la délivrance du brevet:
**08.11.2000 Bulletin 2000/45**

(51) Int Cl.⁷: **F01D 1/30**, F02C 7/36,
F02C 3/113, F16H 3/60

(21) Numéro de dépôt: **99400515.5**

(22) Date de dépôt: **04.03.1999**

(54) **Procédé et dispositif d'inversion de poussée pour moteur à très grand taux de dilution**

Schubumkehrverfahren und -vorrichtung für Turbotriebwerk mit hohem Nebenstromverhältnis

Thrust reversing method and device for high by-pass ratio turbofan

(84) Etats contractants désignés:
**DE FR GB IT**

(30) Priorité: **05.03.1998 FR 9802674**

(43) Date de publication de la demande:
**08.09.1999 Bulletin 1999/36**

(73) Titulaire: **SNECMA MOTEURS**
**75015 Paris (FR)**

(72) Inventeur: **Lardellier, Alain**
**77000 Melun Rance (FR)**

(56) Documents cités:
**FR-A- 845 702**          **FR-A- 1 489 518**
**GB-A- 1 591 568**        **US-A- 3 080 774**
**US-A- 3 116 817**        **US-A- 3 138 972**
**US-A- 3 217 564**        **US-A- 4 005 575**

## Description

L'invention concerne un procédé et un dispositif d'inversion de poussée pour moteur à très grand taux de dilution.

Les turboréacteurs à grand taux de dilution sont bien adaptés au vol subsonique et permettent d'obtenir des rendements propulsifs élevés et des faibles consommations spécifiques de carburant.

Les turboréacteurs à très grand taux de dilution, compris entre 11 et 18, ont un rendement propulsif encore amélioré mais présentent une masse ajoutée et une traînée augmentée dus au grand diamètre de leur soufflante. Ce type de turboréacteur peut être allégé en utilisant une structure de moteur comportant un réducteur de vitesse interposé entre la turbine basse pression et la soufflante, cependant cette structure demeure plus lourde qu'un moteur conventionnel de même poussée. Ceci est en partie dû à la masse de l'inverseur de poussée situé dans la partie de la nacelle de grand diamètre.

Les inverseurs de poussée classiques comportent le plus souvent des éléments déplaçables, tels que des portes basculantes ou des grilles, coopérant en position déployée à la production de l'inversion de poussée.

Il est également connu, pour inverser le flux secondaire d'une turbomachine à double flux, d'utiliser une soufflante à pas variables dont on fait pivoter les pâles. Ce dispositif est généralement moins lourd qu'un inverseur classique à portes ou à grilles, mais nécessite un mécanisme de changement de pas des pales coûteux et compliqué.

Le brevet US 4 005 575 décrit un dispositif d'inversion de poussée d'un turboréacteur comportant une soufflante, deux turbines contrarotatives qui entraînent deux arbres, les deux arbres sont arrangés de manière à tourner à l'intérieur d'un mécanisme à engrenage épicycloïdal dans des directions opposées.

La sortie du mécanisme à engrenage entraîne une soufflante. Le mécanisme à engrenage est arrangé de manière à provoquer un changement de sens de rotation de la soufflante pour un changement donné de la vitesse relative entre les deux arbres.

Ce dispositif présente l'inconvénient de nécessiter des moyens pour faire varier les vitesses de rotation relatives des deux arbres ce qui complique le système d'inversion de poussée et est pénalisant au niveau du coût et du poids du moteur.

Le but de l'invention est de résoudre ces problèmes et de réaliser un dispositif d'inversion de poussée qui soit plus léger que les inverseurs de poussée connus et qui ne présente pas de mécanisme complexe de changement de pas. Pour cela l'invention consiste à utiliser un réducteur de vitesse de type épicycloïdal comportant deux trains d'engrenages montés-en parallèle entre la soufflante et la turbine basse pression du turboréacteur.

Dans un premier mode de fonctionnement, appelé mode direct, le réducteur de vitesse entraîne la soufflante dans le même sens que l'arbre de la turbine basse pression.

Dans un deuxième mode de fonctionnement, appelé mode reverse, le réducteur de vitesse entraîne la soufflante dans le sens contraire de l'arbre de la turbine basse pression.

L'inversion de poussée est obtenue par l'inversion du sens de rotation de la soufflante. Cette inversion du sens de rotation de la soufflante est réalisée par le déblocage d'une couronne externe commune aux deux trains d'engrenages épicycloïdaux.

Selon l'invention, le dispositif d'inversion de poussée d'un turboréacteur à grand taux de dilution comportant une soufflante entraînée en rotation par un arbre de turbine basse pression par l'intermédiaire d'un réducteur de vitesse le réducteur de vitesse comportant des premier et deuxième trains d'engrenages épicycloïdaux montés en parallèle entre la turbine basse pression et la soufflante, les deux trains d'engrenages épicycloïdaux étant agencés de façon à entraîner la soufflante (1) dans un premier sens de rotation pendant un premier mode de fonctionnement, appelé mode direct, et à entraîner la soufflante (1) dans un deuxième sens de rotation inverse du premier sens pendant un deuxième mode de fonctionnement, appelé mode reverse, pour inverser la poussée du turboréacteur.

L'invention concerne également un procédé d'inversion de poussée d'un turboréacteur à grand taux de dilution comportant une soufflante entraînée en rotation par un arbre de turbine basse pression par l'intermédiaire d'un réducteur de vitesse, consistant à inverser le sens de rotation de la soufflante pour obtenir l'inversion de poussée du turboréacteur.

D'autres particularités et avantages de l'invention apparaîtront clairement dans la suite de la description donnée à titre d'exemple non limitatif et faite en regard des figures annexées qui représentent :

- la figure 1, une vue en coupe longitudinale d'un exemple de réalisation du dispositif d'inversion de poussée, selon l'invention ;
- la figure 2, une vue en coupe longitudinale d'une variante de réalisation du dispositif d'inversion de poussée, selon l'invention.

Pour inverser la poussée d'un turboréacteur à très grand taux de dilution compris entre 11 et 18, l'invention consiste à inverser le sens de rotation de la soufflante en utilisant un réducteur de vitesse de type épicycloïdal agencé pour entraîner la soufflante dans un premier ou un deuxième sens de rotation suivant que le turboréacteur est dans un mode de fonctionnement direct ou reverse. Le rapport de réduction du réducteur de vitesse est préférentiellement compris entre 2,6 et 4,5.

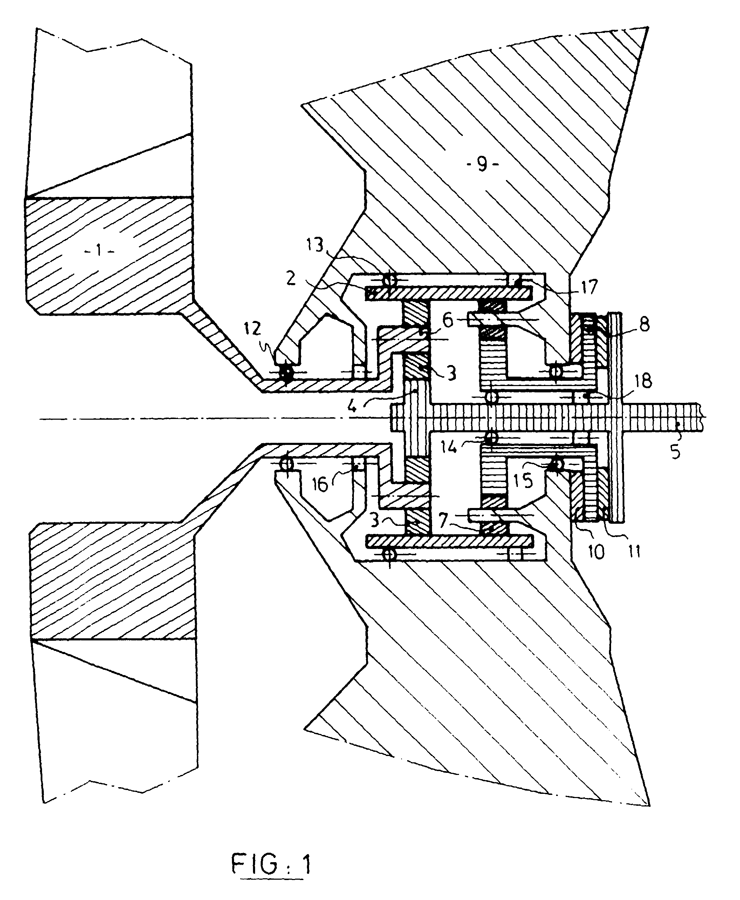

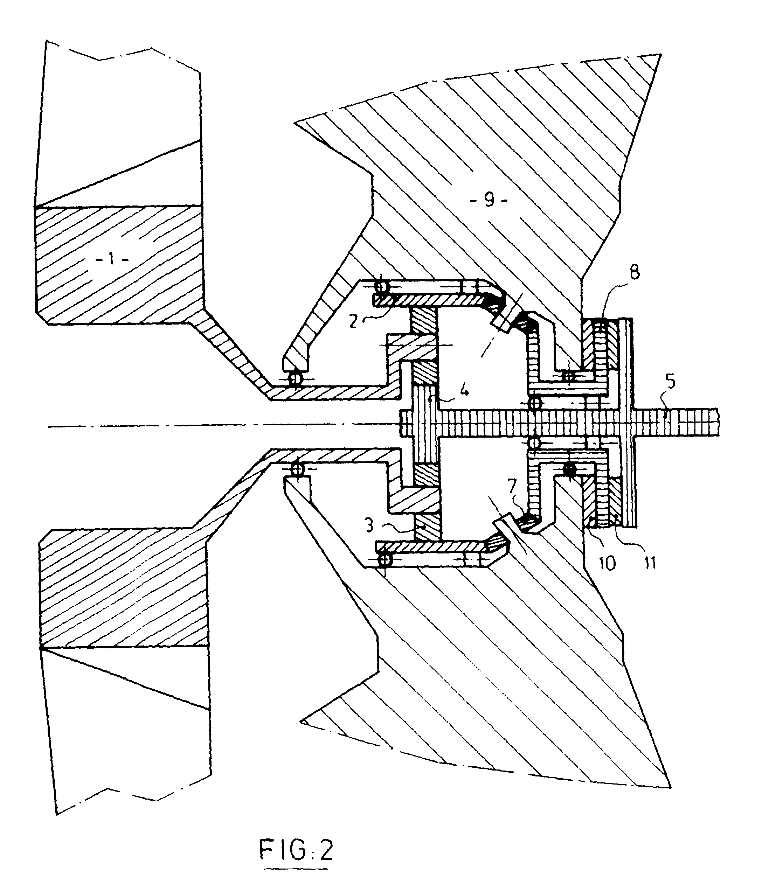

Les figures 1 et 2 montrent deux variantes de réalisation d'un dispositif d'inversion de poussée conforme à l'invention et comportant un réducteur de vitesse de type épicycloïdal monté entre la soufflante 1 et la turbine basse pression (non représentée) du turboréacteur.

Le rapport de réduction du réducteur de vitesse représenté sur les figures 1 et 2 a été choisi égal à 4 et est particulièrement bien adapté à un turboréacteur ayant un taux de dilution de l'ordre de 15.

Le réducteur de vitesse comporte deux trains d'engrenages épicycloïdaux montés en parallèle, les deux trains d'engrenages comportant une couronne 2 externe commune. Le premier train d'engrenages comporte la couronne externe 2, des premiers pignons satellites 3 engrenés d'une part avec la couronne externe 2 et d'autre part avec un premier pignon interne 4 lié à un arbre 5 de la turbine basse pression (non représentée) du turboréacteur. Les premiers pignons satellites 3 sont montés sur un premier porte-satellites 6 solidaire de la soufflante 1.

Le deuxième train d'engrenages comporte la couronne externe 2, des deuxièmes pignons satellites 7 engrenés avec la couronne externe 2 et avec un deuxième pignon interne 8 coaxial à l'arbre 5 de la turbine basse pression.

Les deuxièmes pignons satellites 7 sont montés sur le châssis fixe 9 du turboréacteur.

Le dispositif d'inversion de poussée comporte en outre des moyens d'embrayage de freins 10, 11 destinés respectivement à solidariser le deuxième pignon interne 8 au châssis fixe 9 ou à l'arbre 5 de la turbine basse pression suivant que le turboréacteur est dans un mode de fonctionnement direct ou reverse. Les embrayages de freins 10, 11 sont associés à des freins (non représentés) préférentiellement du type freins à disques en carbone.

Des paliers 12, 13, 14, 15, 16, 17, 18 sont prévus entre les éléments fixes et tournants du dispositif d'inversion de poussée pour supporter les efforts axiaux et/ou radiaux.

Sur la figure 1, tous les pignons et satellites sont droits. Sur la variante de réalisation représentée sur la figure 2, les satellites 7 et le deuxième pignon interne 8 sont des pignons coniques.

Le fonctionnement du dispositif d'inversion de poussée est le même pour les deux variantes représentées sur les figures 1 et 2.

Dans le mode de fonctionnement direct, les moyens d'embrayages de freins 10 sont actionnés pour solidariser le deuxième pignon interne 8 au châssis fixe 9. La couronne externe 2 est immobile et la soufflante 1 tourne dans le même sens que l'arbre 5 de la turbine basse pression du turboréacteur à une vitesse quatre fois plus faible si le rapport de réduction est égal à 4.

L'expression du rapport de réduction est obtenu en appliquant la formule de Willis. Si r1 est le rayon du premier pignon 4 et R1 le rayon de la couronne externe 2 au droit du premier train d'engrenages, l'expression du rapport de réduction est de la forme 1/Z1

avec

$$Z1 = \frac{1}{1 + (R1/r1)}$$

Le rapport de réduction est égal à 4 si R1 = 3r1.

Dans le mode de fonctionnement reverse, les moyens d'embrayages de frein 10 sont désactivés et les moyens d'embrayages de freins 11 sont actionnés pour désolidariser le deuxième pignon interne 8 du châssis et le lier à l'arbre 5 de la turbine basse pression du turboréacteur.

la couronne externe 2 est alors entraînée en rotation par le deuxième train d'engrenages dans le sens contraire de l'arbre 5 de la turbine basse pression. le rapport de réduction 1/Z2 de l'ensemble réducteur est obtenu à partir de la formule de Willis. Si r2 est le rayon du deuxième pignon interne 8 et R2 est le rayon de la couronne externe 2 au droit du deuxième train d'engrenages, le rayon r2 étant supposé égal à r1 dans notre exemple, Z2 est de la forme :

$$Z2 = \left( \frac{r1-r2}{R1} \right) \Big/ \left( 1 + \frac{r1}{R1} \right)$$

Pour que la soufflante 1 tourne dans un sens contraire du sens de rotation de l'arbre 5 de la turbine basse pression et si l'on souhaite que les valeurs absolues des rapports de réduction dans les modes reverse et direct soient égales, il faut que Z2 = - Z1. Cette condition nécessite que :

$$r2 = r1$$

C'est le cas de l'exemple représenté sur les figures 1 et 2.

Dans la phase transitoire permettant de passer du mode de fonctionnement direct au mode de fonctionnement reverse, il est nécessaire de placer le moteur dans un régime de ralenti, de désactiver les moyens d'embrayages de freins 10 de façon progressive, puis d'activer les moyens d'embrayages de freins 11 de façon progressive. Dans cette phase, la régulation du turboréacteur maintient constante la vitesse de rotation de l'arbre 5 de la turbine basse pression jusqu'à ce que la vitesse de rotation du deuxième pignon interne 8 soit égale à la vitesse de rotation de l'arbre 5 de la turbine base pression. Les moyens d'embrayages de frein 11 sont alors verrouillés et le régime de fonctionnement du moteur est accéléré dans le mode de fonctionnement reverse.

Dans la phase transitoire permettant de passer du mode de fonctionnement reverse au mode de fonctionnement direct, les opérations sont similaires et effectuées avec les mêmes précautions que celles décrites ci-dessus. Le moteur est placé au régime de ralenti, la désactivation des moyens d'embrayages de freins 11 et l'activation des moyens d'embrayages de freins 10 sont effectuées de façon progressive et en maintenant constante la vitesse de rotation de l'arbre 5 de la turbine basse pression. Les moyens d'embrayages de freins 10 sont ensuite verrouillés et le moteur est accéléré dans le mode de fonctionnement direct.

L'invention n'est pas limitée aux exemples de réalisation précisément décrits ; en particulier les dimensions des rayons des pignons internes et de la couronne externe des trains d'engrenages sont à adapter en fonction du rapport de réduction souhaité.

De même, d'autres types de trains d'engrenages épicycloïdaux disposés en série peuvent être utilisés.

## Revendications

1. Dispositif d'inversion de poussée d'un turboréacteur à grand taux de dilution comportant une soufflante entraînée en rotation par un arbre de turbine basse pression par l'intermédiaire d'un réducteur de vitesse, le réducteur de vitesse comportant des premier et deuxième trains d'engrenages épicycloïdaux montés en parallèle entre la turbine basse pression et la soufflante, les deux trains d'engrenages épicycloïdaux étant agencés de façon à entraîner la soufflante (1) dans un premier sens de rotation pendant un premier mode de fonctionnement, appelé mode direct, et à entraîner la soufflante (1) dans un deuxième sens de rotation inverse du premier sens pendant un deuxième mode de fonctionnement, appelé mode reverse, pour inverser la poussée du turboréacteur.

2. Dispositif d'inversion de poussée selon la revendication 1, caractérisé en ce que le premier train d'engrenages épicycloïdal comporte un premier pignon interne (4) solidaire de l'arbre (5) de la turbine basse pression, des premiers pignons satellites (3) montés sur un porte-satellites (6) solidaire de la soufflante (1) et une couronne externe (2), la couronne externe (2) étant immobile dans le mode de fonctionnement direct et entraînée en rotation par le deuxième train d'engrenages épicycloïdal dans le mode de fonctionnement inverse.

3. Dispositif d'inversion de poussée selon la revendication 2, caractérisé en ce que le deuxième train d'engrenages épicycloïdal comporte un deuxième pignon interne (8) coaxial à l'arbre (5) de la turbine basse pression, des deuxièmes pignons satellites (7) montés sur un châssis fixe (9) du turboréacteur et engrenant avec la couronne externe (2).

4. Dispositif d'inversion de poussée selon la revendication 3 caractérisé en ce qu'il comporte des premiers moyens d'embrayages (10) pour solidariser le deuxième pignon interne (8) au châssis fixe (9), dans le mode de fonctionnement direct et des deuxièmes moyens d'embrayages pour lier le deuxième pignon interne (8) à l'arbre (5) de la turbine basse pression dans le mode de fonctionnement reverse.

5. Procédé d'inversion de poussée d'un turboréacteur à grand taux de dilution comportant une soufflante entraînée en rotation par un arbre de turbine basse pression par l'intermédiaire d'un réducteur de vitesse selon l'une quelconque des revendications précédentes, consistant à utiliser un réducteur comportant deux trains d'engrenages épicycloïdaux, à monter les deux trains d'engrenages en parallèle entre la soufflante et la turbine basse pression, à équiper les deux trains d'engrenages d'une couronne externe commune, la couronne externe étant bloquée dans un mode de fonctionnement direct du turboréacteur, à débloquer la couronne externe pour inverser le sens de rotation de la soufflante et obtenir l'inversion de poussée du turboréacteur.

6. Procédé d'inversion de poussée selon la revendication 5, caractérisé en ce que le déblocage de la couronne externe (2) consiste :

   - à désolidariser le deuxième pignon interne (8) du châssis fixe (9) par désactivation progressive des premiers moyens d'embrayages (10),
   - à lier le deuxième pignon interne (8) à l'arbre (5) de la turbine basse pression par activation progressive des deuxièmes moyens d'embrayages (11).

7. Procédé d'inversion de poussée selon l'une quelconque des revendications 5 ou 6, caractérisé en ce que le changement du sens de rotation de la soufflante est effectué en plaçant le turboréacteur dans un régime de ralenti et en maintenant constante la vitesse de rotation de l'arbre (5) de la turbine basse pression.

8. Procédé d'inversion de poussée selon la revendication 7, caractérisé en ce que la vitesse de rotation de l'arbre (5) de la turbine basse pression est maintenue constante jusqu'à ce que la vitesse de rotation du deuxième pignon interne (8) soit égale à la vitesse de rotation de la turbine basse pression, puis accélérée dans le mode de fonctionnement reverse.

## Patentansprüche

1. Schubumkehrvorrichtung für ein Turbotriebwerk mit großem Nebenstromverhältnis mit einem Bläser, der von der Welle einer Niederdruckturbine über ein Untersetzungsgetriebe zu einer Drehbewegung angetrieben wird, wobei das Untersetzungsgetriebe eine erste und eine zweite Planetengetriebekette aufweist, die parallel zwischen der Niederdruckturbine und dem Bläser montiert sind, und wobei die beiden Planetengetriebeketten so angeordnet sind, daß sie den Bläser (1) während einer als Direktbetrieb bezeichneten ersten Betriebsart in einer ersten Drehrichtung antreiben und den Bläser (1) während einer als Umkehrbetrieb bezeichneten zweiten Betriebsart in einer zu der ersten Drehrichtung entgegengesetzten zweiten Drehrichtung antreiben, um den Schub des Turbotriebwerks umzukehren.

**2.** Schubumkehrvorrichtung nach Anspruch 1, dadurch gekennzeichnet, daß die erste Planetengetriebekette ein mit der Welle (5) der Niederdruckturbine fest verbundenes erstes inneres Zahnrad (4), ferner erste Satellitenzahnräder (3), die an einem mit dem Bläser (1) fest verbundenen Satellitenträger (6) montiert sind, sowie einen äußeren Kranz (2) besitzt, wobei der äußere Kranz (2) in dem genannten Direktbetrieb unbeweglich ist und in dem Umkehrbetrieb von der zweiten Planetengetriebekette zu einer Drehbewegung angetrieben wird.

**3.** Schubumkehrvorrichtung nach Anspruch 2, dadurch gekennzeichnet, daß die zweite Planetengetriebekette ein zu der Welle (5) der Niederdruckturbine koaxiales zweites inneres Zahnrad (8) sowie zweite Satellitenzahnräder (7) aufweist, die an einem festen Chassis (9) des Turbotriebwerks montiert sind und mit dem äußeren Kranz (2) kämmen.

**4.** Schubumkehrvorrichtung nach Anspruch 3, gekennzeichnet durch erste Kupplungsmittel (10) zum festen Verbinden des zweiten inneren Zahnrads (8) mit dem festen Chassis (9) im Direktbetrieb und zweite Kupplungsmittel zum Verbinden des zweiten inneren Zahnrads (8) mit der Welle (5) der Niederdruckturbine im Umkehrbetrieb.

**5.** Schubumkehrverfahren für ein Turbotriebwerk mit großem Nebenstromverhältnis mit einem Bläser, der von der Welle einer Niederdruckturbine über ein Untersetzungsgetriebe zu einer Drehbewegung angetrieben wird, nach einem der vorhergehenden Ansprüche, wobei das Verfahren darin besteht, daß ein Untersetzungsgetriebe benutzt wird, das zwei Planetengetriebeketten aufweist, daß die beiden Getriebeketten parallel zwischen dem Bläser und der Niederdruckturbine montiert werden, daß die beiden Getriebeketten mit einem gemeinsamen äußeren Kranz ausgestattet werden, wobei der äußere Kranz in einer Direktbetriebsart des Turbotriebwerks blockiert wird, und daß die Blockierung des äußeren Kranzes aufgehoben wird, um die Drehrichtung des Bläsers umzukehren und die Schubumkehr des Turbotriebwerks herbeizuführen.

**6.** Schubumkehrverfahren nach Anspruch 5, dadurch gekennzeichnet, daß das Aufheben der Blockierung des äußeren Kranzes (2) darin besteht,

- daß das zweite innere Zahnrad (8) durch allmähliche Deaktivierung der ersten Kupplungsmittel (10) von dem festen Chassis (9) getrennt wird und
- daß das zweite innere Zahnrad (8) durch allmähliche Aktivierung der zweiten Kupplungsmittel (11) mit der Welle (5) der Niederdruckturbine verbunden wird.

**7.** Schubumkehrverfahren nach einem der Ansprüche 5 oder 6, dadurch gekennzeichnet, daß die Drehrichtungsänderung des Bläsers herbeigeführt wird, indem das Turbotriebwerk in eine Leerlaufdrehzahl gebracht und die Drehgeschwindigkeit der Welle (5) der Niederdruckturbine konstant gehalten wird.

**8.** Schubumkehrverfahren nach Anspruch 7, dadurch gekennzeichnet, daß die Drehgeschwindigkeit der Welle (5) der Niederdruckturbine konstant gehalten wird, bis die Drehgeschwindigkeit des zweiten inneren Zahnrads (8) gleich der Drehgeschwindigkeit der Niederdruckturbine ist, und dann in dem Umkehrbetrieb beschleunigt wird.

**Claims**

**1.** Thrust-reversal device for a high bypass ratio turbofan comprising a fan driven in rotation by a low-pressure turbine shaft via a speed reducer, the speed reducer comprising first and second sets of epicyclic gearing mounted in parallel between the low-pressure turbine and the fan, the two sets of epicyclic gearing being arranged in such a way as to drive the fan (1) in a first direction of rotation during a first mode of operation, known as the direct mode, and to drive the fan (1) in a second direction of rotation which is the opposite of the first direction during a second mode of operation, known as the reverse mode, to reverse the thrust of the turbofan.

**2.** Thrust-reversal device according to Claim 1, characterized in that the first set of epicyclic gearing comprises a first internal gear (4) secured to the shaft (5) of the low-pressure turbine, first planet pinions (3) mounted on a planet carrier (6) secured to the fan (1), and an external annulus gear (2), the external annulus gear (2) being stationary in the direct mode of operation and driven in rotation by the second set of epicyclic gearing in the reverse mode of operation.

3. Thrust-reversal device according to Claim 2, characterized in that the second set of epicyclic gearing comprises a second internal gear (8) coaxial with the shaft (5) of the low-pressure turbine, second planeL pinions (7) mounted on a stationary frame (9) of the turbofan and in mesh with the external annulus gear (2).

4. Thrust-reversal device according to Claim 3, characterized in that it comprises first clutch means (10) for securing the second internal gear (8) to the stationary frame (9) in the direct mode of operation, and second clutch means for connecting the second internal gear (8) to the shaft (5) of the low-pressure turbine in the reverse mode of operation.

5. Method for reversing the thrust of a high bypass ratio turbofan comprising a fan driven in rotation by a low-pressure turbine shaft via a speed reducer according to any one of the preceding claims, consisting in using a reducer comprising two sets of epicyclic gearing, in mounting the two sets of gearing in parallel between the fan and the low-pressure turbine, in fitting the two sets of gearing with a common external annulus gear, the external annulus gear being immobilized in a direct mode of operation of the turbofan, in unlocking the external annulus gear to reverse the direction of rotation of the fan and reverse the thrust of the turbofan.

6. Thrust-reversal method according to Claim 5, characterized in that the unlocking of the external annulus gear (2) consists in:

   - freeing the second internal gear (8) from the stationary frame (9) by gradually deactivating the first clutch means (10),
   - connecting the second internal gear (8) to the shaft (5) of the low-pressure turbine by gradually activating the second clutch means (11).

7. Thrust-reversal method according to either one of Claims 5 and 6, characterized in that the direction of rotation of the fan is changed by placing the turbofan at an idling speed and keeping the rotational speed of the low-pressure turbine shaft (5) constant.

8. Thrust-reversal method according to Claim 7, characterized in that the rotational speed of the low-pressure turbine shaft (5) is kept constant until the rotational speed of the second internal gear (8) is equal to the rotational speed of the low-pressure turbine, then accelerated in the reverse mode of operation.

FIG : 1

FIG.2